# EUROPEAN PATENT APPLICATION

(11) **EP 4 317 934 A1**
(43) Date of publication of application: **07.02.2024**
(21) Application number: 22189035.3
(22) Date of filing: 05.08.2022
(51) Int. Cl.: G01M 3/40, B01D 65/10, E02D 31/02, E04D 13/00, G01M 3/16, C08L 63/00, C08G 59/50

(54) **METHOD OF DETECTING A LEAK IN A LIQUID APPLIED MEMBRANE**

(71) Applicant: Sika Technology AG, 6340 Baar (CH)
(72) Inventor: Scuderi, Michael, Norwood, 02062 (US); Turner, Jeff, Maplewood, 07040 (US); Iskra, Stanislaw, Wallington, 07057 (US); Sanderson, Andrew, Jersey City, 07304 (US); Baker, Bruce, East Brunswick, 08816 (US); Bell, Brian, Delaware, 43015 (US); Munt, Daniel, Jersey City, 07307 (US)
(74) Representative: Sika Patent Attorneys

(57) **Abstract**

Described is a method of detecting a leak in a water impermeable liquid applied membrane comprising the following steps:
a) applying a water impermeable membrane **M** onto an electrically conductive layer **ECL** located on a support substrate **SuS** by the application of a reactive composition in liquid form on the electrically conductive layer **ECL** and letting the applied composition cure;
b) applying electrical voltage between a conductive detector **CD** on top of the water impermeable membrane **M** and the electrically conductive layer **ECL** such that current will flow between the electrically conductive layer **ECL** and the conductive detector **CD** through any leak located within the water impermeable membrane **M;**
c) sensing the current between the electrically conductive layer **ECL** and the conductive detector **CD** so as to detect any leak.

## Description

### Technical field

This invention relates to a method of detecting a leak in a water impermeable liquid applied membrane, preferably on a roof, using voltage to generate a current through any defects which can be detected by sensors on top of the membrane.

### Background of the invention

The failure to detect, find and correct membrane defects during and as soon after its installation as possible, can cause premature failure. Problems include design deficiencies, faulty application of the membrane system and damage by subsequent tradesmen. Roof designs incorporating a waterproofing membranes under a green roof, insulation layer, wear-course, or topping slab greatly exacerbate the problem of leak locating. The early detection of leaks in waterproof membranes is crucial during construction and for effective roof maintenance. Leaks in conventional roof assemblies allow moisture to accumulate under the membrane in the underlying components such as protection boards and insulation. Accumulated water in insulation compromises its thermal properties. Accumulated water in construction materials can cause rotting and other damage which is very costly to repair.

Low voltage electrical conductance testing is often used to detect and locate leaks in waterproof membranes. The principle technique of the conductance leak location method is to establish an electrical potential between the electrically insulating membrane and the underlying roof substrate. A controlled surface covering of water forms the conductive path horizontally across the membrane to any membrane breach. At a breach location, the test instrument detects the electrical path that is formed through the water leaking to the conductive substrate below.

Low voltage electrical methods to detect and locate breaches are effective; however they require a controlled surface covering of water forms the conductive path horizontally across the membrane. This brings the disadvantage of having access to water, requires a uniform distribution of water, potentially damages to area below due to leakage of the applied water and fails to detect leakage around uneven surfaces.

Further, they require an electrically conductive surface immediately below and in intimate contact with the membrane. Membranes in conventional assemblies are made from thermoplastic materials like PVC and polyolefins. These membranes are adhered with adhesives or mechanically fastened to non-conductive materials such as plywood substrate or protection boards which inhibit electric conductance testing. US2014361796 A1 discloses a method of detecting a leak in such a membrane based on thermoplastic material on a roof using low voltage that addresses the problem of said inhibition. It teaches the attachment of the membrane to the roof support substrate by an adhesive layer that includes electrically conductive material onto a conductive primer. This brings the disadvantage of having to apply an adhesive layer in an additional step, that might be prone to failure, on top of the applied conductive primer.

Aim to provide a method for leak detection on waterproof membranes that does not rely on the application of water for detection purposes and does not require the application on a conductive adhesive layer.

### Summary of the invention

According to one aspect of the invention there is provided a method of detecting a leak in a liquid applied water impermeable membrane comprising the following steps:
a) applying a water impermeable membrane **M** onto an electrically conductive layer **ECL** located on a support substrate **SuS** by the application of a reactive composition in liquid form on the electrically conductive layer **ECL** and letting the applied composition cure;
b) applying electrical voltage between a conductive detector **CD** on top of the water impermeable membrane **M** and the electrically conductive layer **ECL** such that current will flow between the electrically conductive layer **ECL** and the conductive detector **CD** through any leak located within the water impermeable membrane **M;**
c) sensing the current between the electrically conductive layer **ECL** and the conductive detector **CD** so as to detect any leak.

According to another aspect of the invention there is provided an epoxy resin composition comprising
- at least one liquid epoxy resin **LER;**
- at least one amine hardener **AH;**
- 4.50 to 9.00 wt.-%, based on the total weight of epoxy resin composition, of carbon fibers **CF** with a length of 40 - 200 µm.

Preferred embodiments of the composition are reproduced in the dependent claims. The invention is elucidated below comprehensively.

### A way of performing the invention

In step b), electrical voltage is applied between a conductive detector **CD** on top of the water impermeable membrane **M** and the electrically conductive layer **ECL** such that current will flow between the electrically conductive layer **ECL** and the conductive detector **CD** through any leak located within the water impermeable membrane **M.**

Preferably, the electrical voltage is applied by using a voltage higher than 600 V, preferably higher than 2 kV, more preferred between 5 and 10 kV.

Hence it is preferred, if in step b), current will flow between the electrically conductive layer **ECL** and the conductive detector **CD** through the air, preferably by an electric arc, of any leak located within the impermeable membrane **M.**

The conductive detector **CD** is preferable a portable device. Preferably, in step c), the conductive detector **CD** detects the current **CD** with an electrode brush, preferably an electrode brush with conductive metal bristles. It is further preferred, that in step c), the current is detected on a dry water impermeable membrane **M.** A suitable conductive detector **CD** is Buckleys' Dry Roof Pro2 flat electronic roof leak detector unit from Buckleys (UVRAL) Ltd.

Preferably the leak detection is carried out by sensing the current between the electrically conductive layer **ECL** and the conductive detector **CD** using a conductor applied on top of the water impermeable membrane **M** which is connected to the voltage potential and includes a sensor in the detector device to detect the current that is created through the water impermeable membrane **M** by the leak.

In step a), a water impermeable membrane **M** is applied onto an electrically conductive layer **ECL** located on a support substrate **SuS** by the application of a reactive composition in liquid form.

In this document the term "water impermeable liquid applied membrane" preferably refers to a material which is applied in liquid form as a layer onto a substrate, and which cures to form an elastic membrane making the substrate waterproof.

In this document, the term "polyurethane polymer" includes all polymers prepared by the so-called diisocyanate polyaddition process. It includes isocyanate-functional polyurethane polymers obtained by reacting polyisocyanates and polyols, which may also be called prepolymers and are polyisocyanates themselves.

The reactive composition is preferably a material which is applied in liquid form as a layer onto a substrate, and which cures to form an elastic membrane making the substrate waterproof.

The reactive composition preferably has a water content of less than 10 wt.-%, preferably less than 5 wt.%, more preferably less than 3 wt.%, based on the total weight of the composition.

Preferably, the reactive composition is selected from the list consisting of reactive one-part polyurethane compositions, reactive two-part polyurethane compositions and reactive two-part polyurea compositions, preferably reactive one-part polyurethane compositions.

Preferably, the reactive one-part polyurethane composition contains:
- at least one isocyanate-functional polyurethane polymer; and
- at least one latent hardener.

The isocyanate-functional polymer is preferably liquid at room temperature.

Preferred are isocyanate-functional polymers of low viscosity, preferably with a viscosity of less than 50 Pa·s, more preferably less than 30 Pa·s, particularly less than 20 Pa·s, measured by a cone-plate-viscometer with a cone diameter of 25 mm, cone angle of 1° at a cone-plate-distance of 0.05 mm and a shear rate of 10 s-1 at 20 °C.

The isocyanate-functional polymer preferably has an NCO-content in the range of 1 to 8 weight-%, preferably 1.5 to 6 weight-%.

The isocyanate-functional polymer preferably has an average molecular weight Mₙ in the range of 1'000 to 15'000 g/mol, preferably 1'500 to 12'000 g/mol.

The isocyanate-functional polymer is preferably obtained from the reaction of an aliphatic isocyante, preferably isophorone diisocyanate, and at least one polyol.

Preferably, the reaction is done in a molar NCO/OH ratio of at least 3/1, preferably in the range of 3/1 to 10/1, more preferably 3/1 to 8/1.

The reaction between isocyanate and the polyol is preferably conducted in the absence of moisture at a temperature in the range of 20 to 160 °C, preferably 40 to 140 °C, possibly in the presence of a suitable catalyst.

The polyol is preferably selected from the group consisting of polyether polyols, polyester polyols, polycarbonate polyols and polyacrylate polyols.

Preferred are polyether polyols, preferably with repetitive units selected from 1,2-ethyleneoxy, 1,2-propyleneoxy, 1,3-propyleneoxy, 1,2-butyleneoxy and 1,4-butyleneoxy. Particularly preferred are 1,2-propyleneoxy units, optionally in combination with some 1,2-ethyleneoxy units at the end of the chains. Further particularly preferred are 1,4-butyleneoxy units.

Preferred are polyetherpolyols with a content of unsaturation below 0.02 mEq/g, preferably below 0.01 mEq/g.

Preferred are polyoxypropylene diols or triols, which optionally are ethyleneoxide-endcapped, with an OH-number in the range of 10 to 250 mg KOH/g, preferably 20 to 125 mg KOH/g.

The polyol preferably has an average OH-functionality in the range of 1.7 to 3.

Particularly preferred are polyoxypropylene diols, which optionally are ethyleneoxide-endcapped, with an average molecular weight Mₙ in the range of 450 to 12'000 g/mol, preferably 1'000 to 6'000 g/mol.

Particularly preferred are further trimethylolpropane or glycerine started polyoxypropylene triols, which optionally are ethyleneoxide-endcapped, with an average molecular weight Mₙ in the range of 3'000 to 8'000 g/mol.

Particularly preferred are further poly(oxy-1,4-butylene) diols, particularly with an OH-number in the range of 50 to 180 mg KOH/g, particularly with an average molecular weight Mₙ in the range of 650 to 2'000 g/mol.

Preferred latent hardeners are blocked amines which have a blocked, hydrolytically activatable amino group and either at least one further blocked, hydrolytically activatable amino group or at least one reactive group R which is selected from the group consisting of hydroxyl group, mercapto group and secondary amino group.

The blocked, hydrolytically activatable amino group of the blocked amine is selected, in particular, from the group consisting of enamino groups, oxazolidino groups, ketimino groups and aldimino groups. Such blocked amines are substances known in polyurethane chemistry which are used as so-called latent hardeners in compositions containing isocyanate groups.

In the present document, "oxazolidino group" refers to both tetrahydrooxazole groups (5-ring) and tetrahydrooxazine groups (6-ring).

Preferably, the blocked, hydrolytically activatable amino group of the blocked amine is an aldimino group.

The blocked amine can be obtained, in particular, from the condensation reaction of a primary or secondary amine with a ketone or aldehyde. Particularly suitable as ketones are acetone, methyl ethyl ketone, methyl propyl ketone, methyl isopropyl ketone, methyl isobutyl ketone, methyl pentyl ketone, methyl isopentyl ketone, diethyl ketone, dipropyl ketone, diisopropyl ketone, dibutyl ketone, diisobutyl ketone, cyclopentanone, cyclohexanone and actetophen. Particularly suitable as aldehyde are formaldehyde, acetaldehyde, propanal, 2-methylpropanal, butanal, 2-methylbutanal, 2-ethylbutanal, pentanal, 2-methylpentanal, 3-methylpentanal, 4-methylpentanal, 2,3-dimethylpentanal, hexanal, 2-ethyl -hexanal, heptanal, octanal, nonanal, decanal, undecanal, 2-methyl-undecanal, dodecanal, methoxyacetaldehyde, cyclopropanecarboxaldehyde, cyclopentanecarboxaldehyde, cyclohexanecarboxaldehyde, diphenylacetaldehyde, benzaldehyde and substituted benzaldehydes.

A blocked amine having at least one oxazolidino group can be obtained in particular from the condensation reaction of at least one hydroxyamine in which the hydroxyl and primary amino groups are separated by an optionally substituted ethylene or trimethylene radical, with at least one ketone or aldehyde, in particular formaldehyde or one of the enolizable ketones or aldehydes mentioned; The aldehydes, in particular 2-methylpropanal, are particularly suitable. Particularly suitable as hydroxyamine are diethanolamine and diisopropanolamine, which lead to hydroxyoxazolidines from which polyoxazolidines can easily be prepared, for example by reaction with a polyisocyanate or a polyester.

A blocked amine having at least one ketimino or aldimino group can be obtained in particular from the condensation reaction of an amine having at least one primary amino group with at least one ketone or aldehyde, as mentioned above. If a ketone is used to block a primary amino group, a ketimino group is formed, while an aldimino group is formed when an aldehyde is used.

Most preferred, the latent hardener is a blocked amine having at least one aldimino group.

Preferably, said blocked amine is present in an amount that the ratio between the total number of aldimine groups to the total number of isocyanate groups is in the range of 0.3 to 1, preferably 0.4 to 1, more preferably 0.5 to 1.

Preferably, the reactive one-part polyurethane composition further contains fillers. Suitable fillers are ground or precipitated calcium carbonates (chalk), which are optionally surface coated with a fatty acid such as stearate, barium sulfate (barytes), slate, silicates (quartz), magnesiosilicates (talc) or alumosilicates (clay, kaolin), dolomite, mica, glass bubbles, silicic acid, particularly highly dispersed silicic acids from pyrolytic processes (fumed silica), carbon black, microspheres, pigments, particularly titanium dioxide or iron oxides, or flame-retarding fillers such as aluminium hydroxides, particularly aluminium trihydroxide (ATH), magnesium dihydroxide, antimony trioxide, antimony pentoxide, boric acid, zinc borate, zinc phosphate, melamine borate, melamine cyanurate, ethylenediamine phosphate, ammonium polyphosphate, di-melamine orthophosphate, di-melamine pyrophosphate, hexabromocyclododecane, decabromodiphenyl oxide and tris(bromoneopentyl) phosphate.

Preferred fillers are chalk, barytes, fumed silica and/or ATH.

Preferably, the reactive one-part polyurethane composition further contains plasticizers. Suitable plasticizers are phthalates, particularly diisononyl phthalate (DINP) or diisodecyl phthalate (DIDP), hydrogenated phthalates, particularly hydrogenated DINP, which is diisononyl-1,2-cyclohexane dicarboxylate (DINCH), terephthalates, particularly bis(2-ethylhexyl) terephthalate or diisononyl terephthalate, hydrogenated terephthalates, particularly bis(2-ethylhexyl)-1,4-cyclohexane dicarboxylate, trimellitates, adipates, particularly dioctyl adipate (DOA), azelates, sebacates, citrates, benzoates, glycol ethers, glycol esters, organic sulfonates or phosphates, particularly diphenylcresyl phosphate (DPK), polybutenes, polyisobutenes or plasticizers obtained from natual fats or oils such as epoxidized soy or linseed oil.

Preferably, the reactive one-part polyurethane composition further contains catalysts. Suitable catalysts for the acceleration of the latent hardeners, preferably aldimine hydrolysis, are acid catalysts, particularly carboxylic acids or sulfonic acids, preferably aromatic carboxylic acids such as benzoic acid or salicylic acid.

Suitable catalysts are catalysts for the acceleration of the reaction of isocyanate groups, particularly metal catalysts, preferably dialkyltin complexes, in particular dibutyltin or dioctyltin carboxylates or acetoacetonates such as dibutyltindilaurate (DBTDL), dibutyltindi(acetoacetate) (DBT(acac)₂) or dioctyltindilaurate (DOTDL), or amine catalysts, preferably tertiary aminoethers, in particular 2,2'-dimorpholinodiethylether (DMDEE).

Preferably, the reactive one-part polyurethane composition further contains additives selected from the group consisting of UV stabilizers, wetting agents, flow enhancers, leveling agents, defoamers, deaerating agents and biocides.

A preferred reactive one-part polyurethane composition contains:
- An amount of isocyanate-functional polymers in the range of 15 to 80 weight-%, particularly 20 to 50 weight-%, in relation to the total composition.
- An amount of latent hardener, preferably aldimines, in the range of 0.5 to 25 weight-%, preferably 1 to 20 weight-%, in relation to the total composition.
- An amount of plasticizers in the range of 0 to 40 weight-%, preferably 10 to 30 weight-%, in relation to the total composition.
- An amount of fillers in the range of 0 to 80 weight-%, preferably 20 to 60 weight-%, in relation to the total composition. Preferably, the filler contains at least one flame-retarding ingredient, more preferably aluminium trihydroxide (ATH).

The composition preferably contains a low amount of volatile organic solvents with a boiling point at atmospheric pressure below 200 °C. Preferably, it contains not more than 200 g of such volatile organic solvents, more preferably not more than 150 g, per liter of the total composition. Such a composition is particularly suitable as coating for the waterproofing of buildings.

The reactive one-part polyurethane composition is preferably formulated as a single-pack composition, prepared by mixing all ingredients under exclusion of moisture to obtain a macroscopically homogeneous fluid or paste and stored in a moisture-tight container at ambient temperatures. A suitable moisture-tight container consists preferably of an optionally coated metal or plastic. It is preferably a bucket, a barrel, a hobbock, a bag, a sausage, a cartridge, a can, a bottle or a tube.

The process of curing begins when the reactive one-part polyurethane composition is applied and gets in contact with moisture, especially atmospheric moisture. Upon curing, the isocyanate groups react under the influence of moisture with the hydrolyzing latent groups of the latent hardener, preferably hydrolyzing aldimine groups. Further, isocyanate groups react with each other under the influence of moisture. As a result of these reactions, the composition cures to form an elastic material.

The reactive one-part polyurethane composition is preferably applied at ambient conditions, preferably in a temperature range of -10 to 50 °C, more preferably -5 to 45 °C, particularly 0 to 40°C.

The curing of the composition preferably also takes place at ambient conditions.

The reactive one-part polyurethane composition preferably has a sufficient open time to allow precise positioning and large surface applications and a fast-curing progress, whereby the composition soon becomes tack-free and shows a fast build-up of mechanical strength and elasticity.

"Open time" is the time period, within which the applied composition can be processed or reworked without any negative effect. It is over when the viscosity of the composition due to progressing curing has risen too much, at the latest when a skin is formed on the surface. The time period, until a skin is formed on the surface, is called "skin formation time" or "skinning time".

In step a), the water impermeable membrane **M** obtained from the reactive composition in liquid form is applied onto an electrically conductive layer **ECL.**

Preferably, the electrically conductive layer **ECL** has a resistance to ground of less than 10⁹ ohm, preferably less than 10⁶ ohm, most preferably between 10⁴ ohm and 10³ ohm

Preferably, conductive layer **ECL** has a layer thickness in the range of 20 to 5000 µm, preferably 150 to 1000 µm, more preferably 250 to 500 µm.

Preferably, conductive layer **ECL** is applied onto the support substrate **SuS** by spraying, brushing or pouring. To form an even layer, the conductive layer **ECL** can then optionally be spread before curing to the desired layer thickness with a suitable tool, preferably as a squeegee, a toothed trowel, a spatula, a roller, a brush or a draw down bar.

The electrically conductive layer **ECL** is located on a support substrate **SuS,** either in direct contact or via one or more additional layers of material. Such additional layers of material are preferably layers of cured synthetic resin layers.

Preferably the electrically conductive layer **ECL** is not tacky. Preferably it is not able to function as an adhesive to bond the water impermeable membrane **M** to the support substrate **SuS.**

Preferably, the electrically conductive layer **ECL** is a synthetic resin layer, preferably selected from the list consisting of epoxy resins, polyurethanes, polyureas, polymethacrylates, polyacrylates, cementitious hybrid systems and polymer-modified cementitious mixtures (PCC).

Preferably the electrically conductive layer **ECL** is epoxy resin layer, preferably obtained from a two-part epoxy composition, more preferably a two-part epoxy composition as mentioned below.

Preferably, the electrically conductive layer **ECL** contains one more conductive additives, preferably selected from the group consisting of carbon fibers, carbon black, graphite, silicon carbide, metal oxides, metals such as iron, ammonium salts, heavy metal-containing or metal-containing fillers, especially antimony- and tin-containing fillers based on titanium dioxide or mica, ionic liquids, ionic and nonionic surfactants, melamine sulfonates and polycarboxylate ethers, preferably carbon fibers.

It is especially preferred if the electrically conductive layer **ECL** is epoxy resin layer obtained from a two-part epoxy composition containing carbon fibers. Even though for the inventive method any suitable electrically conductive layer **ECL** described above can be used, the inventors have developed a particularly suited composition for said electrically conductive layer **ECL.**

Another aspect of the present invention is therefore an epoxy resin composition comprising:
- at least one liquid epoxy resin **LER;**
- at least one amine hardener **AH;**
- 4.50 to 9.00 wt.-%, based on the total weight of epoxy resin composition, of carbon fibers **CF** with a length of 40 - 200 µm, preferably 50 - 150 µm, more preferably 60 - 120 µm.

Preferred one liquid epoxy resin **LER** are in particular aromatic epoxy resins, especially the glycidyl ethers of:
- bisphenol A, bisphenol F or bisphenol A/F, where A stands for acetone and F for formaldehyde, which served as reactants for the preparation of these bisphenols. In the case of bisphenol F, positional isomers may also be present, especially derived from 2,4'- or 2,2'-hydroxyphenylmethane.
- dihydroxybenzene derivatives such as resorcinol, hydroquinone or catechol;
- further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxyphenyl)propane, 2,2-bis(3,5-dibromo-4-hydroxyphenyl)propane, 2,2-bis(4-hydroxy-3-tert-butylphenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trimethylcyclohexane (bisphenol TMC), 1,1-bis(4-hydroxyphenyl)-1-phenylethane, 1,4-bis[2-(4-hydroxyphenyl)-2-propyl]benzene (bisphenol P), 1,3-bis[2-(4-hydroxyphenyl)-2-propyl]benzene (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)methane, 1,1,2,2-tetrakis(4-hydroxyphenyl)ethane, bis(4-hydroxyphenyl) ether or bis(4-hydroxyphenyl) sulfone;
- condensation products of phenols with formaldehyde that are obtained under acidic conditions, such as phenol novolaks or cresol novolaks, also called bisphenol F novolaks;
- aromatic amines such as aniline, toluidine, 4-aminophenol, 4,4'-methylenediphenyldiamine, 4,4'-methylenediphenyldi(N-methyl)amine, 4,4'-[1,4-phenylenebis(1-methylethylidene)]bisaniline (bisaniline P) or 4,4'-[1,3-phenylenebis(1-methylethylidene)]bisaniline (bisaniline M).

A preferred liquid epoxy resin is a liquid resin based on a bisphenol, in particular a bisphenol A diglycidyl ether and/or bisphenol F diglycidyl ether, as are commercially available, for example, from Dow, Huntsman or Momentive. These liquid resins have a viscosity that is low for epoxy resins and good properties as a coating when cured. They may contain proportions of solid bisphenol A resin or novolak glycidyl ethers.

Preferred amine hardener **AH** are selected from the list consisting of:
- aliphatic, cycloaliphatic or arylaliphatic primary di- or triamines, especially isophorone diamine (IPD) and m-xylylenediamine (MXDA),
- ether group-containing aliphatic primary di- or triamines,
- polyamines containing secondary amino groups, preferably 2-piperazin-1-ylethylamine, and
- adducts of these amines with epoxides or epoxy resins, in particular adducts with diepoxides or monoepoxides.

More preferred, the amine hardener **AH** consists of a mixture of said list.

Most preferred, the amine hardener **AH** consists of a mixture of:
- aliphatic, cycloaliphatic or arylaliphatic primary di- or triamines, especially isophorone diamine (IPD) and m-xylylenediamine (MXDA), and
- polyamines containing secondary amino groups, preferably 2-piperazin-1-ylethylamine.

The carbon fibers **CF** have a length of 40 - 200 µm, preferably 50 - 150 µm, more preferably 60 - 120 µm. Fibers longer than 200 µm have the disadvantage that they tend to set up and stick out vertically of the applied and cured epoxy resin composition. The length of the carbon fibers can for example be determined by microscopy.

Preferably, the carbon fibers **CF** have a diameter of 2 - 12 µm, preferably 3 - 10 µm, more preferably 4-7 µm. The length and diameter of the carbon fibers can for example be determined by microscopy.

It is further preferred if the carbon fibers **CF** have an electrical resistivity of less than 5 mΩ^{∗}cm, preferably less than 3 mΩ^{∗}cm, more preferably less than 2 mΩ^{∗}cm.

The carbon fibers **CF** are present in an amount of 4.50 to 9.00 wt.-%, based on the total weight of epoxy resin composition. As can be seen in table 1 in the comparison of Ex.1 and Ex.2 with Ref.5 - Ref.7, an amount of less than 4.50 wt.-% lead to an insufficient conductivity. The comparison of Ex.1 and Ex.2 with Ref.8 indicates that an amount of more than 9.00 wt.-% leads to a too high viscosity that is disadvantageous for the mixing of the epoxy resin composition.

It is preferred if the amount of carbon fibers **CF** is 5.00 to 8.00 wt.-%, 5.25 to 7.00 wt.-%, 5.25 to 6.00 wt.-%, based on the total weight of epoxy resin composition. As can be seen in table 1 in the comparison of Ex.1 with Ex.2, said ranges are preferred with respect to good conductivity in combination with low viscosity. It was further found that the adhesion of an applied water impermeable liquid membrane directly onto the cured composition based on Ex.1 showed the same good adhesion as the cured composition based on Ref.1 not containing carbon fibers.

The comparison of Ex.1 and Ex.2 with Ref.2 and Ref.3 further shows that compositions containing carbon black either showed no sufficient conductivity or a too high viscosity.

Preferably, the epoxy resin composition is a two-part composition consisting of a first part containing the at least one liquid epoxy resin **LER** and a second part containing the at least one amine hardener **AH.** Preferably the carbon fibers **CF** are present in the first part. Preferably the two parts are stored in separate containers.

Preferably, the epoxy resin composition has a water content of less than 5 wt.-%, preferably less than 3 wt.%, based on the total weight of the composition.

Preferably, the epoxy resin composition has, 2 minutes after mixing all the components, a viscosity of less than 15'000 cP, preferably less than 12'500 cP, more preferably less than 10'000 cP, using a Brookfield DV1 Viscometer with a HB-04 spindle @ 100 rpms at 23 °C.

The support substrate SuS is preferably part of a waterproofing system.

The support substrate **SuS** is preferably part of a building, such as balcony, a terrace, a roof, particularly a flat or a slightly sloping roof, a roof garden, in the inner parts of a building of a floor, preferably a roof, particularly preferred a flat roof.

The support substrate **SuS** is preferably made of a material selected from the list consisting of:
- metals and alloys, such as aluminium, copper, iron, steel, nonferrous metals, including surface-finished metals and alloys, such as galvanized metals or chrome-plated metals;
- asphalt;
- bitumen;
- concrete, lightweight concrete, mortar, cement, fiber cement, brick, adobe, tile, slate, gypsum, gypsum panels, or natural stone, such as granite or marble;
- repair or levelling compounds based on PCC (polymer modified cement) or ECC (epoxy modified cement);
- timber, plywood, paper, cardboard, wood materials bonded with organic resins, resintextile composites or so-called polymer composites;
- insulating foams, particularly out of EPS, XPS, PUR, PIR, rock wool, glass wool or foamed glass;
More preferably, the support substrate **SuS** is selected from the list consisting of metals, alloys, asphalt, bitumen, concrete, gypsum, timber and plywood.

The reactive composition is preferably applied by spraying or pouring onto a flat or slightly sloped surface. To form an even coating, the reactive composition can then optionally be spread to the desired layer thickness with a suitable tool, preferably as a squeegee, a toothed trowel, a spatula, a roller, a brush or a draw down bar.

Preferably, the reactive composition is applied in a layer thickness in the range of 0.5 to 3.5 mm, preferably 1.0 to 2.5 mm.

If the support substrate **SuS** is part of a waterproofing system, the reactive composition is preferably applied by pouring it onto the electrically conductive layer **ECL** located on a support substrate **SuS,** followed by spreading it evenly to the desired layer thickness.

In a preferred waterproofing system, a fibre reinforcement mesh is used. The fibre reinforcement mesh is preferably worked into a first layer of the reactive composition as long as the composition is still liquid, preferably by incorporating it thoroughly into the liquid layer with a roller or a brush. After the curing of the reactive composition with the incorporated fibre reinforcement mesh, a next layer of the reactive composition is preferably applied, and the reactive composition is cured.

The fibre reinforcement mesh is preferably a non-woven polyester fibre mesh, or more preferably a non-woven glass fibre mesh.

### Examples

The following examples illustrate the present invention without being limiting.

| | |
|---|---|
| Carbon black powder | Raven 500 Carbon Black Powder, Birla Carbon |
| Carbon fibres | MF IM 56R-080, milled carbon fibres, electrical resistivity: 1.5 mΩ^{∗}cm, fiber length: 80 +-20µm, fiber diameter: 4-7 µm, Apply Carbon S.A. Recycled carbon fibers |
| A-part | A-component of Sikalastic^{®} EP Primer/Sealer, based on liquid bisphenol-A epoxy resin, mix ratio is 3:1 (A:B) by weight, Sika Corporation, USA |
| B-part | B-component of Sikalastic^{®} EP Primer/Sealer, amine mixture containing IPDI, MXDA and 2-piperazin-1-ylethylamine, mix ratio is 3:1 (A:B) by weight, Sika Corporation, USA |

A-part compositions of the inventive compositions Ex.1 and Ex.2 and reference compositions Ref.1 - Ref.8 were prepared by addition of the conductive materials (carbon black powder or carbon fibres) to the A-component of the product Sikalastic^{®} EP Primer/Sealer, by weight percentage based on the total weight of the obtained composition after addition of the conductive material. For carbon black powder, three samples were prepared at 5 wt.-%, 10 wt.-%, and 15 wt.-% of carbon black powder, based on the total weight of the obtained composition. For samples with carbon fibres six samples were prepared at 2 wt.-%, 4 wt.-%, 6 wt.-%, 8 wt.-%, 10 wt.-%, and 15 wt.-%, based on the total weight of the obtained composition. Each composition was then mixed at 700 rpms with a cowles type blade for 30 minutes. Compositions containing 10 wt.-% carbon black,15 wt.-% carbon black and 15 wt.-% of carbon fibres, based on the total weight of the obtained composition, were too high in viscosity for mixing. These A-part compositions were not evaluated further.

After mixing, the remaining A-part composition were evaluated for uniformity and viscosity measurements were taken using a Brookfield DV1 Viscometer @ 23 °C (HB-04 spindle @ 100 rpms). Each measurement was recorded. The results of the viscosity measurements of said A-part compositions are shown in table 1 ("Viscosity").

The A-part compositions described above were then mixed with the B-component of Sikalastic^{®} EP Primer/Sealer (B-part) in a mix ratio so that the amount of component A without the added conductive material (pure A-component of Sikalastic^{®} EP Primer/Sealer) to the B-component (A-component: B-component) was 3:1 by weight. The compositions were mixed for 2 minutes by hand to achieve a uniform mixture. Each sample was applied to paper substrate using a 1/8th inch notched squeegee and then back-rolled with a 3/8th of an inch paint roller to smooth out notch marks from the squeegee. Each sample was allowed to fully cure for 24 hours. In addition, the viscosity of the composition Ex.1 was determined 2 minutes after the mentioned mixing by hand and was found to be 3500 cP.

The conductivity was tested using a Buckleys' Dry Roof Pro2 flat electronic roof leak detector unit. The grounding wire was secured to one corner of the applied and fully cured composition. The unit was set to output 7.56 kV from the electrode. The electrode, a 150 mm long stainless-steel drum-brush, was swept across the coating to measure the conductivity. The unit is set to detect a current of 200 µA or more by emitting an audible alarm. Each sample was checked over the entire surface area of the applied composition to assure uniform conductivity. The results are shown in table 1 ("Conductivity").

After the conductivity was verified, a reactive composition in liquid form (Sikalastic^{®}-641) was applied directly over the above mentioned fully cured composition of Ex.1 and Ex.2 using a ½ inch nap roller to a coat weight of approximately 1.25 mm. Sika Reemat Premium, a chopped strand fiberglass mat, was applied to the wet coating and back rolled to embed the reinforcement, then allowed to cure for 24 hrs. After 24 hours of cure a second coat of Sikalastic-641 was applied on top of the reinforcement to a coat weight of approximately 0.75 mm (total thickness of the system approximately 2.00 mm). The system was then allowed to cure for 72 hours.

The system was then checked for conductivity to ensure membrane integrity. As before, the grounding wire was secured to one exposed corner of the (conductive) fully cured composition, and the electrode was swept across the surface of the cured Sikalastic-641 membrane. No conductivity was observed indicating zero voids in the Sikalastic-641 membrane. Damage to the Sikalastic-641 membrane was simulated by making a 2-inch razor cut and a thumbtack pierce through the system all the way down to the primer layer. The system was then checked with the Buckleys' leak detector unit for conductivity. The signal was observed over both simulated damage conditions and not in any other section of the system.

Compositions Ref.1 and Ex.1 were also evaluated for the strength/quality of adhesion of the Sikalastic 641 membrane coated over the cured compositions. Compositions Ref.1 and Ex.1 were applied to a standard concrete block and allowed to cure for 24 hours and a Sikalastic 641 membrane was applied on top as mentioned above for the conductivity testing and allowed to fully cure for 2 weeks. Adhesion was evaluated using an Elcometer 510 Automatic Pull-Off Adhesion Gauge in accordance with ASTM D7234-21 for both compositions Ref.1 and Ex.1. No significant difference of adhesion values was observed, indicating the addition of the carbon fibres had no detrimental effect on adhesion. The results are shown in table 1 ("Adhesion").

**Table 1, n.d. = not determined**

| | **A-part composition** | **Viscosity** | **Conductivity** | **Adhesion** |
|---|---|---|---|---|
| **Ref.1** | No conductive material added to component A | 1879 cP | **NO** | ^{~}250 psi |
| **Ref.2** | 5 wt.-% carbon black in component A (3.57 wt.-% total composition (A + B part)) | 8800 cP | NO | n.d. |
| **Ref.3** | 10 wt.-% carbon black in component A (6.82 wt.-% total composition (A + B part)) | Too high | n.d. | n.d. |
| **Ref.4** | 15 wt.-% carbon black in component A (9.79 wt.-% total composition (A + B part)) | Too high | n.d. | n.d. |
| **Ref.5** | 2 wt.-% carbon fibres in component A (1.47 wt.-% total composition (A + B part)) | 1920 cP | **NO** | n.d. |
| **Ref.6** | 4 wt.-% carbon fibres in component A (2.89 wt.-% total composition (A + B part)) | 2224 cP | **NO** | n.d. |
| **Ref.7** | 6 wt.-% carbon fibres in component A (4.25 wt.-% total composition (A + B part)) | 2896 cP | **NO** | n.d. |
| **Ex.1** | 8 wt.-% carbon fibres in component A (5.56 wt.-% total composition (A + B part)) | 4080 cP | YES | ^{~}250 psi |
| **Ex.2** | 10 wt.-% carbon fibres in component A (6.82 wt.-% total composition (A + B part)) | 10,160 cP | YES | n.d. |
| **Ref.8** | 15 wt.-% carbon fibres in component A (9.79 wt.-% total composition (A + B component)) | Too high | n.d. | n.d. |

## Claims

1. Method of detecting a leak in a water impermeable liquid applied membrane comprising the following steps:
a) applying a water impermeable membrane **M** onto an electrically conductive layer **ECL** located on a support substrate **SuS** by the application of a reactive composition in liquid form on the electrically conductive layer **ECL** and letting the applied composition cure;
b) applying electrical voltage between a conductive detector **CD** on top of the water impermeable membrane **M** and the electrically conductive layer **ECL** such that current will flow between the electrically conductive layer **ECL** and the conductive detector **CD** through any leak located within the water impermeable membrane **M;**
c) sensing the current between the electrically conductive layer **ECL** and the conductive detector **CD** so as to detect any leak.

2. Method according to claim 1, wherein step b) the electrical potential is generated by using a voltage higher than 600 V, preferably higher than 2 kV, more preferred between 5 and 10 kV.

3. Method according to any proceeding claims, wherein the reactive composition is selected from the list consisting of reactive one-part polyurethane compositions, reactive two-part polyurethane compositions and reactive two-part polyurea compositions, preferably reactive one-part polyurethane compositions.

4. Method according to any proceeding claims, wherein the reactive composition has a water content of less than 10 wt.-%, preferably less than 5 wt.%, more preferably less than 3 wt.%, based on the total weight of the composition.

5. Method according to any proceeding claims, wherein in step b) current will flow between the electrically conductive layer **ECL** and the conductive detector **CD** through the air, preferably by an electric arc, of any leak located within the impermeable membrane **M.**

6. Method according to any proceeding claims, wherein in step c) the current is detected by the conductive detector **CD** with an electrode brush, preferably an electrode brush with conductive metal bristles.

7. Method according to any proceeding claims, wherein the water impermeable membrane **M** is applied in direct contact to the electrically conductive layer **ECL** on the support substrate **SuS.**

8. Method according to any proceeding claims, wherein the electrically conductive layer **ECL** is a synthetic resin layer, preferably selected from the list consisting of epoxy resins, polyurethanes, polyureas, polymethacrylates, polyacrylates, cementitious hybrid systems and polymer-modified cementitious mixtures (PCC), preferably epoxy resins.

9. Method according to any proceeding claims, wherein the electrically conductive layer **ECL** contains one more conductive additives, preferably selected from the group consisting of carbon fibers, carbon black, graphite, silicon carbide, metal oxides, metals such as iron, ammonium salts, heavy metal-containing or metal-containing fillers, especially antimony- and tin-containing fillers based on titanium dioxide or mica, ionic liquids, ionic and nonionic surfactants, melamine sulfonates and polycarboxylate ethers, preferably carbon fibers.

10. Method according to any proceeding claims, wherein the electrically conductive layer **ECL** has a resistance to ground of less than 10⁹ ohm, preferably less than 10⁶ ohm, most preferably between 10⁴ ohm and 10³ ohm.

11. Method according to any proceeding claims, wherein the electrically conductive layer **ECL** has a layer thickness in the range of 20 to 5000 µm, preferably 150 to 1000 µm, more preferably 250 to 500 µm.

12. Method according to any proceeding claims, wherein the reactive composition is applied in a layer thickness in the range of 0.5 to 3.5 mm, preferably 1.0 to 2.5 mm.

13. Method according to any proceeding claims, wherein the support substrate **SuS** is a roof.

14. Epoxy resin composition comprising:
- at least one liquid epoxy resin **LER;**
- at least one amine hardener **AH;**
- 4.50 to 9.00 wt.-%, based on the total weight of epoxy resin composition, of carbon fibers **CF** with a length of 40 - 200 µm, preferably 50 - 150 µm, more preferably 60 - 120 µm.

15. Epoxy resin composition according to claim 14, wherein the carbon fibers **CF** have a diameter of 2 - 12 µm, preferably 3 -10 µm, more preferably 4-7 µm.

16. Epoxy resin composition according to claim 14 or 15, wherein the carbon fibers **CF** have an electrical resistivity of less than 5 mΩ^{∗}cm, preferably less than 3 mΩ^{∗}cm, more preferably less than 2 mΩ^{∗}cm.

17. Epoxy resin composition according to any of claims 14 to 16, wherein the composition, 2 minutes after mixing all the components, has a viscosity of less than 15'000 cP, preferably less than 12'500 cP, more preferably less than 10'000 cP, using a Brookfield DV1 Viscometer with a HB-04 spindle @ 100 rpms at 23 °C.

18. Epoxy resin composition according to any of claims 14 to 17, wherein the amount of carbon fibers **CF** is 5.00 to 8.00 wt.-%, preferably 5.25 to 7.00 wt.-%, more preferably 5.25 to 6.00 wt.-%, based on the total weight of epoxy resin composition.
